(19) Europäisches Patentamt
European Patent Office
Office européen des brevets

(11) **EP 4 650 569 A2**

(12) # EUROPEAN PATENT APPLICATION

(43) Date of publication:
**19.11.2025 Bulletin 2025/47**

(21) Application number: **25176496.5**

(22) Date of filing: **14.05.2025**

(51) International Patent Classification (IPC):
**F01D 9/04** *(2006.01)*

(52) Cooperative Patent Classification (CPC):
**F01D 9/041; F01D 21/003; F04D 29/542;**
**G01B 11/24; G06F 30/17; G06F 30/20;**
F05D 2230/60; F05D 2240/12; F05D 2260/80;
F05D 2260/81; G06F 2111/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **14.05.2024 US 202418663777**

(71) Applicant: **PRATT & WHITNEY CANADA CORP.**
**Longueuil, Québec J4G 1A1 (CA)**

(72) Inventors:
• **RAHMAN, Mizanur**
**(01BE5) Longueuil, J4G 1A1 (CA)**
• **PUMA, Justin**
**(01BE5) Longueuil, J4G 1A1 (CA)**

(74) Representative: **Dehns**
**10 Old Bailey**
**London EC4M 7NG (GB)**

(54) **PROCESS OF PREPARING A VANE RING**

(57)    The process (100) can include : scanning the vane ring (22), including creating a tri-dimensional digital model of the vane ring (22) in an initial configuration; performing a computerized simulation of airflow across the vane ring (22) based on the tri-dimensional digital model; identifying one or more flow discrepancy based on the computerized airflow simulation; associating a subset of one or more vanes (24) of the set of vanes (24) to the one or more flow discrepancy; and plastically deforming at least one vane (24) of the subset.

FIG. 2

**Description**

TECHNICAL FIELD

The application relates generally to the manufacturing of gas turbine engines and, more particularly, to the production, inspection, and assembly of vane rings.

BACKGROUND OF THE ART

The manufacturing of gas turbine engines used as aircraft power plants is a complex endeavor which involves the production of assembly of different parts, some which are outsourced, others of which are produced by the engine provider. Many of the parts have strict dimensional tolerances and/or flow-related requirements. Vane rings, which are typically used to control the velocity and direction of gasses between rotor stages in turbine sections of gas turbine engines to improve energy extraction efficiency, for instance, are subject to such tolerances and requirements. While existing ways of managing the production, inspection, and assembly of vane rings were satisfactory to a certain degree, there always remains room for improvement.

SUMMARY

In one aspect of the present invention, there is provided a process of preparing a vane ring of a gas turbine engine, the vane ring having a set of vanes, the process comprising: creating a tri-dimensional digital model of the vane ring in an initial configuration, the creating including scanning the vane ring in the initial configuration; using the tri-dimensional digital model, performing a computerized simulation of airflow across the vane ring in the initial configuration; identifying a flow discrepancy associated with the vane ring based on results of the computerized simulation; and associating a subset of one or more vanes of the set of vanes to the flow discrepancy.

In an embodiment of the above, the process further comprises modifying the vane ring into a subsequent configuration, the modifying including plastically deforming at least one vane of the subset to reduce the flow discrepancy.

In an embodiment according to any of the previous embodiments, the process further comprises creating a tri-dimensional digital model of the vane ring in the subsequent configuration, the creating including scanning the vane ring in the subsequent configuration.

In an embodiment according to any of the previous embodiments, the process further comprises validating the vane ring, including using the tri-dimensional digital model in the subsequent configuration, performing a computerized simulation of airflow across the vane ring in the subsequent configuration, and identifying a flow conformity associated with the vane ring based on results of the computerized simulation of airflow across the vane ring in the subsequent configuration, and further comprising assembling the vane ring, in the subsequent configuration, in the gas turbine engine.

In an embodiment according to any of the previous embodiments, the performing the computerized simulation includes computing an effective flow area of the vane ring and determining air mass flow across the vane ring based on correlation data associating the effective flow area and the air mass flow.

In an embodiment according to any of the previous embodiments, said identifying a flow discrepancy includes comparing an air mass flow between at least one pair of the vanes of the set of vanes and between an inner ring and an outer ring of the vane ring, with specifications and determining that the air mass flow between the at least one pair of vanes fails to conform to the specifications.

In an embodiment according to any of the previous embodiments, said associating includes isolating said at least one pair of vanes from other vanes of the set of vanes.

In an embodiment according to any of the previous embodiments, the process further comprises computing a dimensional difference between a current configuration of one of the vanes of the subset and specifications pertaining to the set of vanes, further comprising plastically deforming at least one vane of the subset including straining the one of the vanes of the subset based on the dimensional difference.

In an embodiment according to any of the previous embodiments, said straining includes measuring a strain and controlling the straining based on the measurement of the strain and the dimensional difference in a manner for the straining to remain within a plastic behavior regime of the one of the vanes to said straining while conforming to the specifications.

In an embodiment according to any of the previous embodiments, said plastically deforming the subset of one or more vanes includes applying a stress in excess of an elastic limit at ambient temperature.

In an embodiment according to any of the previous embodiments, said plastically deforming the subset of one or more vanes includes applying a stress in excess of an elastic limit while maintaining the subset of one or more vanes are above 500°C.

In an embodiment according to any of the previous embodiments, said computerized simulation of airflow includes information pertaining to variations in air flow parameters which can be expected over time.

In an embodiment according to any of the previous embodiments, the process further comprises performing a computerized dimensional inspection on the tridimensional digital model of the vane ring.

In another aspect of the present invention, there is provided a method of reworking a vane ring of a gas turbine engine, the method comprising : based on a tri-dimensional digital model of the vane ring, performing a computerized simulation of airflow across the vane ring; identifying a flow discrepancy pertaining to a pair of adjacent vanes of the vane ring based on the computerized simulation including comparing a value acquired from the computerized simulation to a criterion; and plastically deforming at least one vane of the pair of adjacent vanes.

In an embodiment of the above, the method further comprises creating the tridimensional digital model of the vane ring, including scanning the vane ring using an optical scanner.

In an embodiment according to any of the previous embodiments, said value is a value of air mass flow between the vanes of the pair, the criterion includes at least one of a minimum value of the air mass flow and a maximum value of the air mass flow, and said identifying a flow discrepancy includes determining that the value of air mass flow exceeds the maximum value or is below the minimum value.

In an embodiment according to any of the previous embodiments, the method further comprises computing a dimensional difference between a current configuration of one of the vanes of the subset and a tolerance pertaining to the set of vanes.

In an embodiment according to any of the previous embodiments, the method further comprises performing a computerized dimensional inspection on the tridimensional digital model of the vane ring.

In an embodiment according to any of the previous embodiments, the method further comprises outputting results of the computerized dimensional inspection and outputting results of the computerized simulation.

In another aspect of the present invention, there is provided a system for validating a vane ring, the system comprising: a processor; a non-transitory machine-readable memory operatively connected to the processor, and storing : a tri-dimensional digital model of the vane ring; correlation data associating effective flow area and air mass flow; and instructions executable by the processor and configured to cause the one or more processor to: perform a computerized simulation of airflow across the vane ring based on the tri-dimensional digital model including computing an effective flow area of the vane ring and determining air mass flow across the vane ring based on the correlation data; identifying a flow discrepancy based on the computerized simulation; and associating a subset of one or more vanes of a set of vanes of the vane ring to the flow discrepancy.

DESCRIPTION OF THE DRAWINGS

Reference is now made to the accompanying figures in which:

Fig. 1 is a schematic cross-sectional view of a gas turbine engine;

Fig. 2 is a front elevation view of an example of a vane ring;

Fig. 3 is a flow chart of an example process of preparing a vane ring;

Fig. 4 is a flow chart of an example method of reworking a vane ring;

Fig. 5 is a diagram showing a test rig for measuring mass flow rate across a vane ring; and

Fig. 6 is a block diagram of a computer.

DETAILED DESCRIPTION

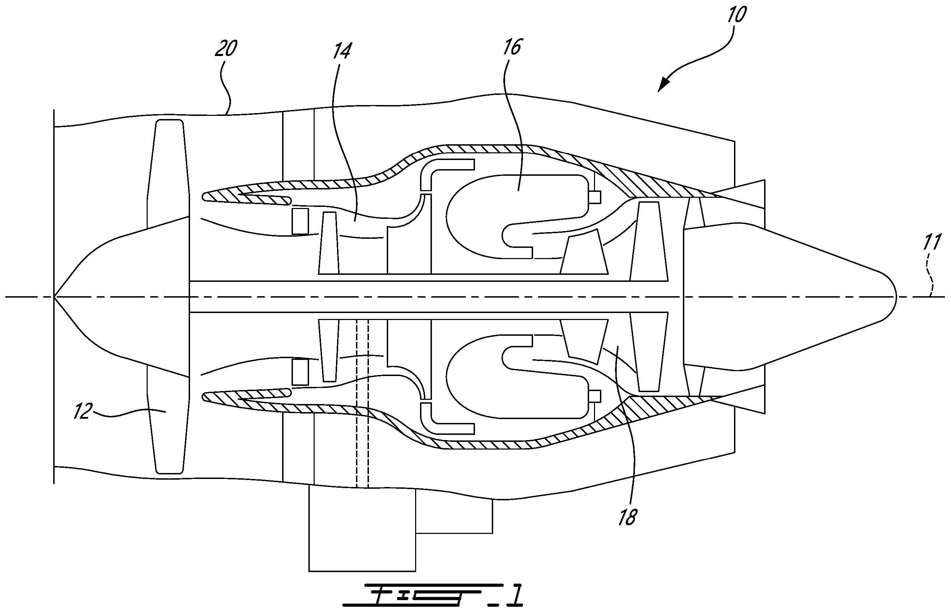

Fig. 1 illustrates a gas turbine engine 10 of a type preferably provided for use in subsonic flight, generally comprising in serial flow communication a fan 12 across which ambient air is propelled, a compressor section 14 for pressurizing the air, a combustor 16 in which the compressed air is mixed with fuel and ignited for generating an annular stream of hot combustion gases around the engine axis 11, and a turbine section 18 for extracting energy from the combustion gases.

In the embodiment presented in Fig. 1, the gas turbine engine 10 is embodied as a turbofan engine. Turbofan engines are characterized by the use of the fan 12 which can be considered a first stage of the compressor section 14. The fan 12 is circumscribed by a bypass duct 20. The bypass duct 20 partially axially overlaps the core engine formed of the remainder of the compressor section 14, the combustor 16 and the turbine section 18. The flow of air across the fan 12 is divided between a core flow directed to the core engine, and a bypass flow circulating in the bypass duct, around the core engine, downstream of the fan 12. Other types of gas turbine engines exist, such as turboprop and turboshaft engines, where a power shaft of the core engine is coupled respectively to a propeller or helicopter blades for instance. Still other types of gas turbine engines exist, such as auxiliary power units. Other types of power plants can be used in aviation. For instance, aircraft hybrid powerplants comprising a combination of electric and heat engines have become more and more popular over recent years.

Various types of aircraft power plants use axial compressors and/or axial turbines. Axial turbines, in particular, typically include an alternating sequence of one or more stator stages and one or more rotor stages. The one or more rotor stages have airfoils referred to as blades which rotate to transfer energy into the gas flow (for compressors) or extract energy from the gas flow (for turbines). The energy can be in the form of pressure, temperature and velocity. The one or more stator stages have airfoils referred to as vanes which are non-rotary. The vanes are used to control the flow in a manner to optimize efficiency of the energy transfer, and typically do so by increasing gas velocity while optimizing gas flow direction for the next rotor stage. In some cases, the vanes are static, whereas in others, such as in variable-geometry elements, the vanes can pivot around an axis which extends along their length, and the pivoting can be controlled to adapt the geometry of the stator stage as a function of changing operating conditions.

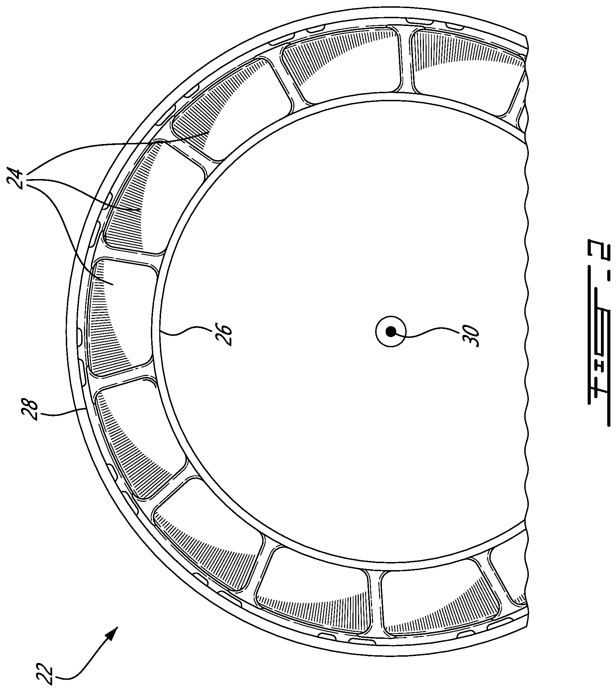

An example of a stator stage having vanes 24 is presented in Fig. 2. In this example, the vanes 24 are circumferentially interspaced from one another, relative a central axis 30, in a typical regular arrangement. Each vane 24 extends radially relative to the axis 30, between an inner vane ring 26 and an outer vane ring 28. The inner vane ring 26 and the outer vane ring 28 are annular components. The vane ring 22 has a plurality of individual flow passages which extend circumferentially and axially between corresponding pairs of vanes and radially between the inner vane ring 26 and the outer vane ring 28. More specifically, the vanes 24, the inner vane ring 26, and the outer vane ring 28 can be said to delimit the flow passages. In this embodiment, the vanes 24 are static and fixed at both ends to the inner vane ring 26 and to the outer vane ring 28. The stator stage can be referred to, as a whole, as a "vane ring" 22. Vane rings can be provided as a monolithic component (e.g., cast or produced by machining or additive manufacturing - such as is the case for the vane ring 22 illustrated in Fig. 2), or in the form of assemblies. In some embodiments, the inner vane ring 26, the outer vane ring 28, and the vanes 24 may be produced independently and then assembled rather than manufactured monolithically.

Depending on the embodiment, the vanes 24 can have various geometries and the various parameters, such as vane length, vane width, vane angle, gap between vanes, details of curvature, etc., are adapted to the function associated to the specific context of use. Such parameters can be defined in specifications of the vane ring 22. Vane rings 22 can also have flow rate requirements which may also be specified in specifications of the vane ring 22. In a typical gas turbine engine manufacturing process, vane rings 22 are to be inspected prior to acceptance and assembly into the gas turbine engine 10. The inspection can involve checking the values of various parameters against the specifications. It was relatively common for vane rings 22 to fail the inspection process, and to be scrapped, which was undesirable, particularly when considering the cost associated to the production of vane rings 22.

In one embodiment of a gas turbine engine 10 manufacturing process, vanes rings 22 are dimensionally inspected for compliance with dimensional requirements using an automated coordinate-measuring machine (CMM), and separately tested for compliance with flow rate requirements using a rig. The air flow test may involve mounting the vane ring 22 in a rig, and flowing a controlled flow rate of air across the vanes 24 while measuring values of relevant parameters such as air pressure and/or flow rate. The measured variable(s) can be compared to requirements, and the tests may either pass or fail. The airflow test fails when a flow discrepancy is detected. Vane rings 22 are relatively expensive components. When the test fails, it can be financially and/or ecologically worthwhile to attempt to correct the vane ring by modifying its geometry (e.g., by reworking the vane ring), and test it again, in a hope of avoiding the scrapping of the vane ring 22. The modification can involve applying stress to the vanes in a manner to strain them past the elastic deformation regime, into the plastic deformation regime (also known as the plastic behavior regime), and thus plastically deform them without reaching the breaking point. In some embodiments, the adjustment can be performed in a "cold" manner, e.g., at room temperature. In other embodiments, the adjustment can be performed in a "hot" manner, e.g. at a higher temperature (such as above 500°C, typically between 700 and 900°C), when the metal of the vanes is significantly more malleable at the higher temperatures.

In this embodiment, the flow test only measures an indication of total mass flow rate across the vane ring 22. The indication of a flow discrepancy does not specify which one of or more of the vanes 24 of the vane ring 22 are the source of the air flow discrepancy. Moreover, the amplitude of the dimensional difference between the configuration of the one or more faulty vanes and the specification may be too small to be visible to the naked eye. In such conditions, an operator wishing to attempt to correct the vane ring, may only be able to do so "blindly", by applying stress on each one of the vanes 24, or to each pair of vanes 24, hoping that his manipulation will have addressed the issue. The levels of stress required to reach the plastic deformation regime may be difficult to apply without reaching the breaking point, or otherwise damaging the vane rings 22, and in some cases, the operator may terminally damage the vane ring 22 while attempting to correct it. Once the plastic deformation has been applied, and if the vane ring 22 has not been damaged during its application, the air flow test and possibly the dimensional inspection can be conducted again, providing a second chance to the vane ring 22 to pass the test.

It was found that there was room for improvement over the embodiment described above. Indeed, it was found that applying deformation "blindly" on all pairs of vanes 24 is not only time consuming, but can lead to a higher probability of damaging the vanes 24, potentially making them unrepairable. It was also found that performing the air flow test was time consuming and thus costly, particularly if it needed to be conducted more than once. It was also found that performing the dimensional inspection using CMM was time consuming, particularly if it needed to be conducted more than once.

In other embodiments, such limits are addressed by using a different process. The process can begin with creating a tridimensional (3D) digital model of the vane ring 22 including scanning it with an optical (3D) scanner. A suitable example of an optical scanner is the Scanbox™ manufactured by Zeiss, for instance, though other optical scanners may be suitable. The 3D digital model of the vane ring 22 can be stored in non-transitory memory. Computer readable instructions can also be provided, stored in a non-transitory memory 414. The non-transitory memory 414 may be readable by a computer 400, and the instructions may be executable by a processor 412 of the computer 400. The computer 400, executing the instructions, can perform a computerized simulation of airflow across the vane ring 22, based on the tridimensional digital model stored in the non-transitory memory 414. The computerized simulation can simulate the flow test which was described as being performed with a rig in the embodiment presented above. Interestingly, the computerized simulation can provide more information than the flow test. More specifically, the computerized simulation can allow to provide a measurement pertaining to the air flow across individual ones of the flow passages which lie circumferentially and axially between corresponding pairs of vanes 24 and radially between the inner vane ring 26 and the outer vane ring 28, based on the detailed geometry of the vane ring 22 present in the 3D digital model.

The computerized simulation of flow across the vane ring 22 can lead to a measurement of variables such as flow rate based on flow parameter inputs such as pressure, viscosity, density and temperature. In an embodiment, the computerized simulation can compute effective flow area of the vane ring 22 and determine mass flow rate across the vane ring 22 based on correlation data stored in the non-transitory memory 414. The correlation data can stem from previous measurements taken both from the rig and from the 3D scanners, for instance. The correlation data can tie correction factors to variations in flow parameter inputs. A detailed example of how correlation data can be acquired will be presented below.

The computerized simulation of the flow across the vane ring 22 can further allow to detect, more precisely, one or more flow discrepancy based on the computerized airflow simulation. The one or more flow discrepancy can be associated specifically to a first subset of one or more vanes 24, a second subset of one or more of the vanes 24 being unassociated to flow discrepancies. The first subset of one or more vanes 24 can include individual vanes or pairs of adjacent vanes 24, amongst the entire set of vanes 24, which may cause a more significant restriction to the flow than the other individual vanes 24 or pairs of vanes 24. Such individual vanes 24 or pairs of vanes 24 can be identified explicitly, such as visually on a display screen of the computer for instance, either graphically or by identifying individual vanes 24 using alphanumerical coordinates for instance, in a manner to allow operators to perform the adjustment specifically on the one or more vanes 24 of the first subset, while leaving the one or more vanes 24 of the second subset intact. This can reduce the likelihood of damaging the one or more vanes 24 of the second subset, for instance, and save time in performing the plastic deformation by performing it only on the one or more vanes 24 of the first set, in a manner to reduce the discrepancy.

In some embodiments, values of air mass flow between individual pairs of adjacent vanes can be acquired from the computerized simulation. These values of air mass flow can be compared to criterion, such as a minimum value of air mass flow and a maximum value of air mass flow set out in specifications also stored in the form of data in memory 414. A flow discrepancy specific to one pair of vanes can be identified when the air mass flow rate acquired from the computerized simulation for that pair of vanes is below the minimum value or above the maximum value, for instance. The flow discrepancy can be associated to a scenario where the vanes of the pair are too close to or too spaced-apart from one another. Information pertaining to the identification of the vanes of the pair and to the scenario (e.g., too close or too far), may be outputted thereafter.

Once the modification has been applied, the vane ring can be in a subsequent (geometrical) configuration, different from the initial configuration. A tridimensional digital model of the vane ring in the subsequent configuration can be created including scanning the vane ring in the subsequent configuration. A subsequent computerized simulation of airflow across the vane ring can be performed based on the tridimensional model in the subsequent configuration. The vane ring may then either be validated, including identifying a flow conformity associated with the vane ring based on results of the subsequent computerized simulation, or a further flow discrepancy can be identified. If a further flow discrepancy is identified, the vane ring can be modified again in a manner to reduce the flow discrepancy. The vane ring can be assembled into the gas turbine engine contingent upon the validation.

The 3D digital model of the vane ring 22 can also conveniently be used for purposes of performing dimensional inspection in a fully computerized manner, such as by executing a corresponding set of instructions stored in non-transitory memory 414 onto the tridimensional digital model. The corresponding set of instructions can include instructions to compare dimensional values of the 3D digital model to corresponding tolerances specified in the specifications, which may be stored in the non-transitory memory 414. For instance, a flow discrepancy may be identified when the air mass flow in a given one or more of the flow passages is found to be inferior to the specifications, and the measured values fail to conform to the specifications. In an embodiment, the process may include the computer 400 outputting results of the computerized dimensional inspection and identifiers of the one or more vanes 24 of the subset. More specifically, the subset of one or more vanes associated to the flow discrepancy may be isolated from the other vanes of the set of vanes, and identifiers of the vanes forming part of the subset can be outputted as being tied to a flow discrepancy, or more specifically tied to a specific flow discrepancy (e.g., air flow or dimensional tolerance measurement found to be too low or to high compared to a corresponding tolerance defined in the specifications). In an embodiment, the process may include the computer 400 outputting deviation values between the one or more vanes 24 of the subset and specifications, the deviation values associated to corresponding ones of the identifiers. The deviation values can be values of dimensional differences between a current configuration of one of the vanes 24 of the subset and specifications pertaining to the set of vanes 24.

In one embodiment, a set of instructions stored in non-transitory memory 414 can be executed to determine, based on the 3D digital model of the vane ring, not only which one or more of the vanes 24 or of the pairs of vanes 24 is associated to a flow rate issue, but further to quantify how the one or more vanes 24 should be deformed, e.g., by how much, in order to conform to the specifications. One or more vane 24 of the subset may need to be plastically deformed to conform to the specification. For each one of these vanes 24 which are to be deformed, the quantification of the relevant deformation(s) can be communicated to the operator, such as displayed on a display screen for instance. The operator can then proceed to plastically deform each one of these one or more vanes 24 (or pair of vanes 24) in an informed manner, i.e., in a way to apply the specific amount of strain which allows to exceed the elastic limit of the corresponding vane 24 and enter the plastic deformation domain, to continue straining until the vane 24 reaches the specification, while not reaching the limit of the plastic deformation domain, also referred to as the breaking point. This process can be facilitated by tools. For instance, in one embodiment, the strain being applied to a vane 24 while performing the plastic deformation can be measured and compared to corresponding values of elastic limit, specification, and/or breaking point. In some embodiment, the process can be automated using a suitable machine based on instructions stored in non-transitory memory.

In some embodiments, a computerized process may determine choking area of individual ones of the spacings between different pairs of vanes, between the inner ring and the outer ring, and the choking area can be compared to specifications when identifying a flow discrepancy.

Once the plastic deformation of each one of the one or more vanes 24 of the first subset has been applied, the vane ring 22 can be re-subjected to the inspection process. Accordingly, the vane ring 22 can be scanned anew, to produce a tri-dimensional digital model of the vane ring 22 in a subsequent configuration to the initial configuration. In the subsequent configuration, the geometry of the vanes 24 of the first subset can be different from the geometry of the vanes 24 of the first subset in the tridimensional digital model of the vane ring in the initial configuration, due to the plastic deformation, while the vanes of the second subset can be identical (e.g., due to not having been plastically deformed in between). In some embodiments, if the inspection fails, a further correction iteration can be performed, and so forth, until the vane ring 22 passes the inspection or is determined to have become unsuitable for its intended purpose, beyond the point of correctability. The vane ring 22 can be assembled to the gas turbine engine 10 contingent upon the passing of the inspection. Once assembled to the gas turbine engine 10, the vane ring 22 can be in the second configuration. An additional correction may have occurred between the initial configuration and the final configuration in some embodiments, in which case the final configuration may still be referred to as the second configuration for simplicity.

In some embodiments, the 3D digital model of the vane ring 22 can represent valuable manufacturing data which can be used in different ways, such as being used to perfect the fabrication process of the vane rings 22, for instance. To this end, the 3D digital model can be shared with the corresponding department, or to an external vane ring supplier, alone or together with simulation results or results of dimensional inspection, to name some examples.

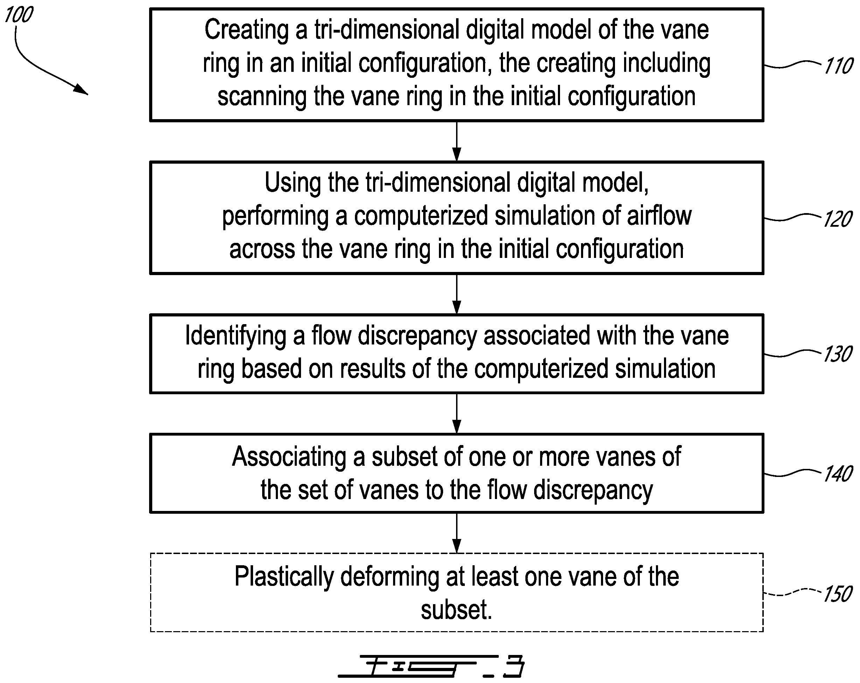

Accordingly, referring to Fig. 3, in some embodiments, the process 100 can include creating 110 a tri-dimensional digital model of the vane ring in an initial configuration, including scanning the vane ring 22; performing 120 a computerized simulation of airflow across the vane ring 22 based on the tri-dimensional digital model; identifying 130 one or more flow discrepancy based on the computerized airflow simulation; associating 140 a subset of one or more vanes 24 of the set of vanes 24 to the one or more flow discrepancy. The process can further include plastically deforming 150 at least one vane of the subset while not deforming vanes which are outside (i.e., do not form part of) the subset.

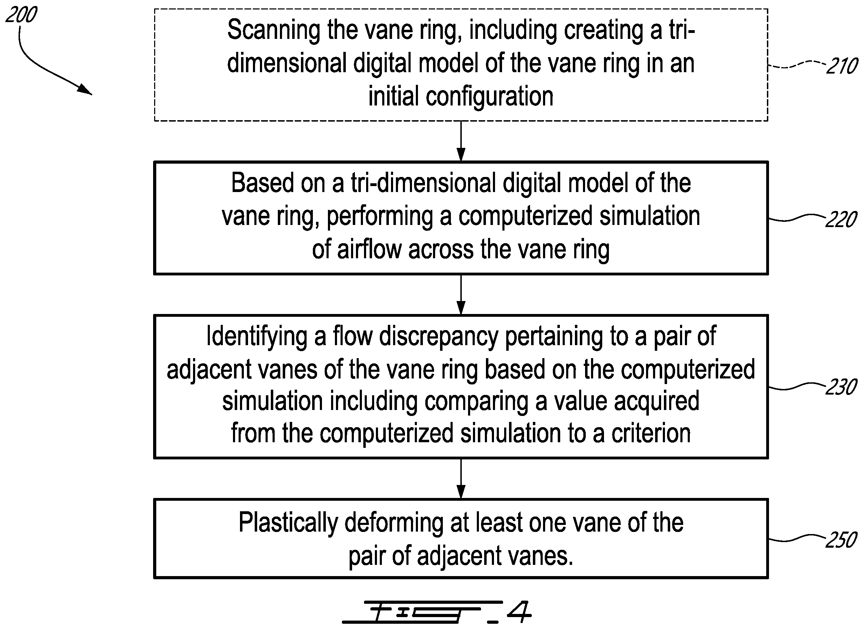

Referring to Fig. 4, in some embodiments, the method 200 can include performing 220 a computerized simulation of airflow across the vane ring based on a tri-dimensional digital model of the vane ring; identifying 230 a flow discrepancy pertaining to a pair of adjacent vanes of the vane ring based on the computerized simulation including comparing a value acquired from the computerized simulation to a criterion; and plastically deforming 250 at least one vane of the pair of adjacent vanes. The method can optionally include creating 210 a tri-dimensional digital model of the vane ring in an initial configuration including scanning the vane ring, including.

In some embodiments, the instructions to perform the computerized simulation of airflow across the vane ring based on the tridimensional digital model, identify one or more flow discrepancy, and associate a subset of one or more of the vanes to the one or more flow discrepancy, can be based on correlation data acquired via a previously performed correlation-building process. The previously performed correlation-building process can be based both i) on the rig test exposed in an embodiment described above and ii) on the tridimensional digital model acquired.

An example of a suitable correlation-building process will now be described.

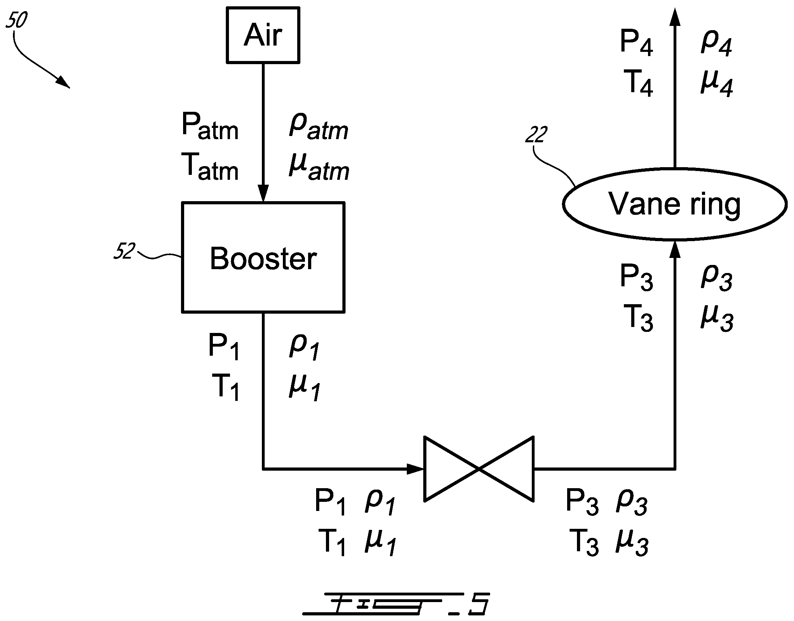

Referring to Fig. 5, in a first step of the process, a number of vane rings 22 (e.g., 5 or 10, based on a desired level of statistical representativity) of a same model can be subjected to a rig test in an airflow rig 50 set-up as illustrated. The airflow rig 50 set up can use a booster compressor 52 and flow control elements to circulate air in controlled conditions up to the vane ring 22, and across the vane ring 22. The following air flow constants can be measured : (T, Temperature), (P, Pressure), ($\rho$, Density) and ($\mu$, Viscosity). The test can be repeated on a number of arbitrarily selected days when shopfloor conditions may vary, in order to avoid being biased by a relatively uncommon set of shopfloor conditions.

The choking area of each one of the number of vane rings can then be measured from a partial or complete tridimensional model. For instance, in an embodiment, a tridimensional model of the vane rings can be acquired by scanning with an optical scanning system, and measurements can be made off this partial or complete tridimensional model using metrology software. For instance, in some embodiments, portions of the tridimensional model of the vane ring which do not form part of the gas path can be excluded in the computer simulation. The following steps can be performed:

Compute the geometric flow area ($A_{GFA}$) of each choking area in the vane ring (e.g., the choking area of an individual one of the flow passages)

Compute the effective flow area ($A_{EFA}$) of the entire vane ring

While theoretically $A_{EFA_{theorencal}} = n \cdot GFA$; where n is the total number of chocking areas in the vane, in reality, $A_{EFA_{real}} = \Sigma A_{GFA}$ due to the geometric deviations between each choking area due to the part deviation occurs during the manufacturing process.

For each day of airflow measurements in the experimental airflow set-up, the recorded constants (T, P, $\rho$, $\mu$) can be used to compute the airflow ($Q_{EFA}$) using the EFA data from the scanner results, via :

$$Q_{EFA} = \frac{C}{\sqrt{1 - \beta^4}} \varepsilon \frac{\pi}{4} d^2 \sqrt{2\Delta p \rho_1} = \frac{C}{\sqrt{1 - \beta^4}} \varepsilon A_{EFA} \sqrt{2\Delta p \rho_1}$$

Where :

C = orifice plate's discharge coefficient

d = sum of all throat diameters in the vane ring

$\varepsilon$ = expansivity coefficient (accounts for gas compressibility effects, corrects fluid density)

$A_{EFA}$ = total choking area of the vane

$\rho_1$ = upstream fluid density

$\Delta p$ = pressure difference between static pressure taps upstream and downstream of the orifice plate

b = diameter ratio = d/D

D = pipe diameter

Orifice plate calculations can be performed as per ISO 5167-2:2003, whereas discharge coefficient calculations can be performed as per ISO 5267-2:2003.

Airflow can be considered a function of air parameters (T, P, $p$, $\mu$) and vane choking area ($A_{EFA}$).

At this stage, a validation can be performed that the results have negligible deviation (i.e., are accurate and precise). More specifically, the deviation between the airflow rig data and the EFA-computed airflow can be checked as follows :

$\Delta Q = |Q_{rig} - Q_{EFA}|$ ; are these results within the established airflow tolerance defined in the specifications?

We can also verify that airflow parameters in the test rig are kept constant (i.e. shopfloor conditions are constant)

$$\Delta T = T_{max} - T_{min}$$

$$\Delta P = P_{max} - P_{min}$$

$$\Delta \rho = \rho_{max} - \rho_{min}$$

$$\Delta \mu = \mu_{max} - \mu_{min}$$

We can inspect the variation between EFA-computed airflow and GFA-computed airflow

$$\Delta Q_{EFA-GFA} = |Q_{EFA} - Q_{GFA}|$$

$Q_{EFA}$ uses $EFA_{real}$ computed from the measurement system
$Q_{GFA}$ uses $EFA_{theorerical}$ where $EFA_{theorerical} = n \cdot GFA_{average}$

$$\Delta Q = Q_{rig} - Q_{EFA}$$

We can inspect the variation ratio between $Q_{EFA}$ and $Q_{rig}$

If $Q_{EFA}/Q_{rig}$ = constant (K), then this constant (we will call it the flow ratio constant) can be used to upgrade the airflow equation for more accurate computation

$$Q_{EFA} = \left[ \frac{C}{\sqrt{1 - \beta^4}} \varepsilon A_{EFA} \sqrt{2\Delta p \rho_1} \right] \cdot K$$

If the airflow variation is within tolerance and the airflow parameters prove to be constant, the following methodology can be used to inspect and validate future vane rings :

$$Q_{EFA} = \left[ \frac{C}{\sqrt{1 - \beta^4}} \varepsilon A_{EFA} \sqrt{2\Delta p \rho_1} \right] \cdot K$$

where $A_{EFA}$ is data provided from the tridimensional models.

The % of tolerance consumed by the predicted mass flow rate, $Q_{EFA}$ , can be evaluated as follows :

$$\% \text{ tolerance consumed} = \frac{Q_{EFA} - Q_{rig}}{\text{tolerance}}$$

This value can allow the user to predict the airflow without applying the flow ratio constant.

Any other vane ring 22 in that part number will be scanned and, using the 3D scan data, the inspection process can accept or reject the part.

The value of these empirical constants can be equally applicable for the mass flow calculation of all other part numbers.

In some embodiments, we can also measure flow parameters such as temperature, pressure, humidity, air viscosity at the time when measurements are made on actual vane rings using the flow rig, and the values of these flow parameters can be stored. Digital analysis, which may further use the tridimensional models of the vane rings which were also taken for each flow rig test, can allow to ascertain the impact of variations of the values of such flow parameters on the air mass flow measurements. These relationships can be fed to the computerized simulation in a manner to improve the accuracy of the computerized simulation when the computerized simulation factors in the effects of variations in flow parameters which may be expected to occur throughout the year.

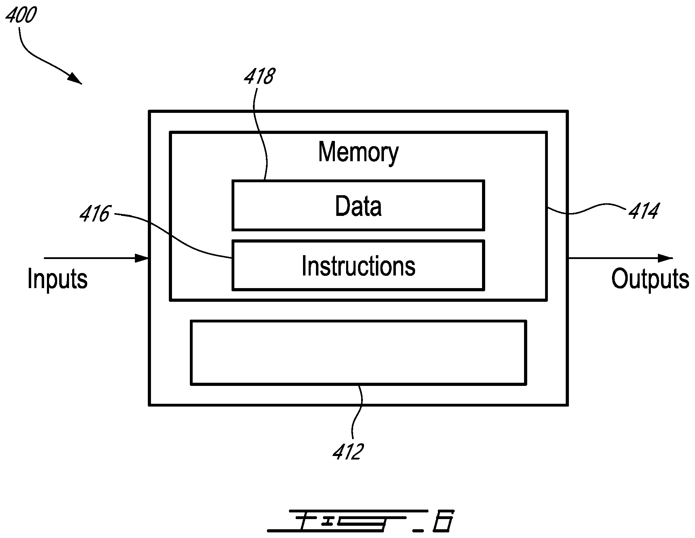

Referring to Fig. 6, it will be understood that the expression "computer" 400 as used herein is not to be interpreted in a limiting manner. It is rather used in a broad sense to generally refer to the combination of some form of one or more processors 412 and some form of memory 414 accessible by the processor(s). The memory (or memory for short) can be of the non-transitory type. The use of the expression "computer" and "processor" in its singular form as used herein includes within its scope one or more processors working to perform a given function.

The computer(s) 400 or computing devices of the controller may be the same or different types of devices. Note that the controller can be implemented as part of a fullauthority digital engine controls (FADEC) or other similar device, including electronic engine control (EEC), engine control unit (ECU), electronic propeller control, propeller control unit, and the like. In some embodiments, the controller is implemented as a Flight Data Acquisition Storage and Transmission system, such as a FASTTM system. The controller may be implemented in part in the FASTTM system and in part in the EEC. Other embodiments may also apply.

The computer(s) 400 comprises a processor 412 and a memory 414 which has stored therein computer-executable instructions 416 and data 418. The processor may comprise any suitable devices configured to implement a method such that instructions, when executed by the computer(s) or other programmable apparatus, may cause the functions/acts/steps performed to control the mode of operation of the engine to be executed. The processor 412 may comprise, for example, any type of general-purpose microprocessor or microcontroller, a digital signal processing (DSP) processor, a central processor (CPU), an integrated circuit, a field programmable gate array (FPGA), a reconfigurable processor, other suitably programmed or programmable logic circuits, or any combination thereof.

The memory 414 may comprise any suitable known or other machine-readable storage medium. The memory may comprise non-transitory computer readable storage medium, for example, but not limited to, an electronic, magnetic, optical, electromagnetic, infrared, or semiconductor system, apparatus, or device, or any suitable combination of the foregoing. The memory may include a suitable combination of any type of computer memory that is located either internally or externally to device, for example randomaccess memory (RAM), read-only memory (ROM), compact disc read-only memory (CDROM), electro-optical memory, magneto-optical memory, erasable programmable read-only memory (EPROM), and electrically-erasable programmable read-only memory (EEPROM), Ferroelectric RAM (FRAM) or the like. Memory may comprise any storage means (e.g., devices) suitable for retrievably storing machine-readable instructions 416 executable by processor.

The methods and systems for controlling the engine described herein may be implemented in a high level procedural or object oriented programming or scripting language, or a combination thereof, to communicate with or assist in the operation of a computer system, for example the computer(s). Alternatively, the methods and systems may be implemented in assembly or machine language. The language may be a compiled or interpreted language. Program code for implementing the methods and systems may be stored on a storage media or a device, for example a ROM, a magnetic disk, an optical disc, a flash drive, or any other suitable storage media or device. The program code may be readable by a general or special-purpose programmable computer for configuring and operating the computer when the storage media or device is read by the computer to perform the procedures described herein. Embodiments of the methods and systems may also be considered to be implemented by way of a non-transitory computer-readable storage medium having a computer program stored thereon. The computer program may comprise machine-readable instructions which cause a computer, or more specifically the processor of the computing device, to operate in a specific and predefined manner to perform the functions described herein.

Computer-executable instructions may be in many forms, including program modules, executed by one or more computers or other devices. Generally, program modules include routines, programs, objects, components, data structures, etc., that perform particular tasks or implement particular abstract data types. Typically the functionality of the program modules may be combined or distributed as desired in various embodiments.

The embodiments described herein are implemented by physical computer hardware, including computing devices, servers, receivers, transmitters, processors, memory, displays, and networks. The embodiments described herein provide useful physical machines and particularly configured computer hardware arrangements. The embodiments described herein are directed to electronic machines and methods implemented by electronic machines adapted for processing and transforming electromagnetic signals which represent various types of information. The embodiments described herein pervasively and integrally relate to machines, and their uses; and the embodiments described herein have no meaning or practical applicability outside their use with computer hardware, machines, and various hardware components. Substituting the physical hardware particularly configured to implement various acts for non-physical hardware, using mental steps for example, may substantially affect the way the embodiments work. Such computer hardware limitations are clearly essential elements of the embodiments described herein, and they cannot be omitted or substituted for mental means without having a material effect on the operation and structure of the embodiments described herein. The computer hardware is essential to implement the various embodiments described herein and is not merely used to perform steps expeditiously and in an efficient manner.

The technical solution of embodiments may be in the form of a software product. The software product may be stored in a non-volatile or non-transitory storage medium, which can be a compact disk read-only memory (CD-ROM), a USB flash disk, or a removable hard disk. The software product includes a number of instructions that enable a computer device (personal computer, server, or network device) to execute the methods provided by the embodiments.

While the description may present method and/or process steps as a particular sequence, it is understood that to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

Furthermore, no element, component, or method step in the present disclosure is intended to be dedicated to the public regardless of whether the element, component, or method step is explicitly recited in the claims. As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus. As used herein, the term "about" is intended to allow for a 10% variation of the associated numerical values.

While various aspects of the present disclosure have been disclosed, it will be apparent to those of ordinary skill in the art that many more embodiments and implementations are possible within the scope of the present disclosure. For example, the present disclosure as described herein includes several aspects and embodiments that include particular features. Although these particular features may be described individually, it is within the scope of the present disclosure that some or all of these features may be combined with any one of the aspects and remain within the scope of the present disclosure. References to "various embodiments," "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. The use of the indefinite article "a" as used herein with reference to a particular element is intended to encompass "one or more" such elements, and similarly the use of the definite article "the" in reference to a particular element is not intended to exclude the possibility that multiple of such elements may be present.

The embodiments described in this document provide non-limiting examples of possible implementations of the present technology. Upon review of the present disclosure, a person of ordinary skill in the art will recognize that changes may be made to the embodiments described herein without departing from the scope of the present technology. Other applications would be recognized by the person of ordinary skill in the art and are considered to be within the scope of the present disclosure. Yet further modifications could be implemented by a person of ordinary skill in the art in view of the present disclosure, which modifications would be within the scope of the present technology.

## Claims

1. A process (100) of preparing a vane ring (22) of a gas turbine engine (10), the vane ring (22) having a set of vanes (24), the process (100) comprising:

   creating a tri-dimensional digital model of the vane ring (22) in an initial configuration, the creating including scanning the vane ring (22) in the initial configuration;
   using the tri-dimensional digital model, performing a computerized simulation of airflow across the vane ring (22) in the initial configuration;
   identifying a flow discrepancy associated with the vane ring (22) based on results of the computerized simulation; and
   associating a subset of one or more vanes (24) of the set of vanes (24) to the flow discrepancy.

2. The process (100) of claim 1, further comprising modifying the vane ring (22) into a subsequent configuration, the modifying including plastically deforming at least one vane (24) of the subset to reduce the flow discrepancy.

3. The process (100) of claim 2, wherein said plastically deforming the subset of one or more vanes (24) includes applying a stress in excess of an elastic limit at ambient temperature.

4. The process (100) of claim 2, wherein said plastically deforming the subset of one or more vanes (24) includes applying a stress in excess of an elastic limit while maintaining the subset of one or more vanes (24) are above 500°C.

5. The process (100) of claim 2, 3 or 4, further comprising creating a tri-dimensional digital model of the vane ring (22) in the subsequent configuration, the creating including scanning the vane ring (22) in the subsequent configuration, optionally further comprising validating the vane ring (22), including using the tri-dimensional digital model in the subsequent configuration, performing a computerized simulation of airflow across the vane ring (22) in the subsequent configuration, and identifying a flow conformity associated with the vane ring (22) based on results of the computerized simulation of airflow across the vane ring (22) in the subsequent configuration, and further comprising assembling the vane ring (22), in the subsequent configuration, in the gas turbine engine (10).

6. The process (100) of any preceding claim, wherein the performing the computerized simulation includes computing an effective flow area of the vane ring (22) and determining air mass flow across the vane ring (22) based on correlation data (418) associating the effective flow area and the air mass flow.

7. The process (100) of any preceding claim, wherein said identifying a flow discrepancy includes comparing an air mass flow between at least one pair of the vanes (24) of the set of vanes (24) and between an inner ring (26) and an outer ring (28) of the vane ring (22), with specifications and determining that the air mass flow between the at least one pair of vanes (24) fails to conform to the specifications, optionally wherein said associating includes isolating said at least one pair of vanes (24) from other vanes (24) of the set of vanes (24).

8. The process (100) of any preceding claim, further comprising computing a dimensional difference between a current configuration of one of the vanes (24) of the subset and specifications pertaining to the set of vanes (24), further comprising plastically deforming at least one vane (24) of the subset including straining the one of the vanes (24) of the subset based on the dimensional difference, optionally wherein said straining includes measuring a strain and controlling the straining based on the measurement of the strain and the dimensional difference in a manner for the straining to remain within a plastic behavior regime of the one of the vanes (24) to said straining while conforming to the specifications.

9. The process (100) of any preceding claim, wherein:

   said computerized simulation of airflow includes information pertaining to variations in air flow parameters which can be expected over time; and/or
   the process (100) further comprises performing a computerized dimensional inspection on the tri-dimensional digital model of the vane ring (22).

10. A method of reworking a vane ring (22) of a gas turbine engine (10), the method comprising:

    based on a tri-dimensional digital model of the vane ring (22), performing a computerized simulation of airflow across the vane ring (22);
    identifying a flow discrepancy pertaining to a pair of adjacent vanes (24) of the vane ring (22) based on the computerized simulation including comparing a value acquired from the computerized simulation to a criterion; and
    plastically deforming at least one vane (24) of the pair of adjacent vanes (24).

11. The method of claim 10, further comprising creating the tri-dimensional digital model of the vane ring (22), including scanning the vane ring (22) using an optical scanner.

12. The method of claim 10 or 11, wherein said value is a value of air mass flow between the vanes (24) of the pair, the criterion includes at least one of a minimum value of the air mass flow and a maximum value of the air mass flow, and said identifying a flow discrepancy includes determining that the value of air mass flow exceeds the maximum value or is below the minimum value.

13. The method of claim 10, 11 or 12, further comprising computing a dimensional difference between a current configuration of one of the vanes (24) of the subset and a tolerance pertaining to the set of vanes (24).

14. The method of any of claims 10 to 13, further comprising performing a computerized dimensional inspection on the tri-dimensional digital model of the vane ring (22), optionally further comprising outputting results of the computerized dimensional inspection and outputting results of the computerized simulation.

15. A system for preparing a vane ring (22), the system comprising:

    a processor (412); and
    a non-transitory machine-readable memory (414) operatively connected to the processor (412), and storing :
    a tri-dimensional digital model of the vane ring (22);
    correlation data (418) associating effective flow area and air mass flow; and
    instructions executable by the processor (412) and configured to cause the one or more processor (412) to:

       perform a computerized simulation of airflow across the vane ring (22) based on the tri-dimensional digital model including computing an effective flow area of the vane ring (22) and determining air mass flow across the vane ring (22) based on the correlation data (418);
       identify a flow discrepancy based on the computerized simulation; and
       associate a subset of one or more vanes (24) of a set of vanes (24) of the vane ring (22) to the flow

discrepancy.

FIG - 1

FIG.2

EP 4 650 569 A2

EP 4 650 569 A2

```
┌─────────────────────────────────────────────────┐
│ Creating a tri-dimensional digital model of the │
│ vane ring in an initial configuration, the      │——— 110
│ creating including scanning the vane ring in the│
│ initial configuration                           │
└─────────────────────────────────────────────────┘
                         │
                         ▼
┌─────────────────────────────────────────────────┐
│ Using the tri-dimensional digital model,        │
│ performing a computerized simulation of airflow │——— 120
│ across the vane ring in the initial configuration│
└─────────────────────────────────────────────────┘
                         │
                         ▼
┌─────────────────────────────────────────────────┐
│ Identifying a flow discrepancy associated with  │
│ the vane ring based on results of the           │——— 130
│ computerized simulation                         │
└─────────────────────────────────────────────────┘
                         │
                         ▼
┌─────────────────────────────────────────────────┐
│ Associating a subset of one or more vanes of    │
│ the set of vanes to the flow discrepancy        │——— 140
└─────────────────────────────────────────────────┘
                         │
                         ▼
┌ ─ ─ ─ ─ ─ ─ ─ ─ ─ ─ ─ ─ ─ ─ ─ ─ ─ ─ ─ ─ ─ ─ ─ ─┐
│ Plastically deforming at least one vane of the  │——— 150
│ subset.                                         │
└ ─ ─ ─ ─ ─ ─ ─ ─ ─ ─ ─ ─ ─ ─ ─ ─ ─ ─ ─ ─ ─ ─ ─ ─┘
```

100

FIG. 3

EP 4 650 569 A2

*200*

┌─────────────────────────────────────────────────┐
│ Scanning the vane ring, including creating a tri- │
│ dimensional digital model of the vane ring in an  │    *210*
│ initial configuration                             │
└─────────────────────────────────────────────────┘

                         ↓

┌─────────────────────────────────────────────────┐
│ Based on a tri-dimensional digital model of the   │
│ vane ring, performing a computerized simulation   │    *220*
│ of airflow across the vane ring                   │
└─────────────────────────────────────────────────┘

                         ↓

┌─────────────────────────────────────────────────┐
│ Identifying a flow discrepancy pertaining to a pair of │
│ adjacent vanes of the vane ring based on the computerized │
│ simulation including comparing a value acquired   │    *230*
│ from the computerized simulation to a criterion   │
└─────────────────────────────────────────────────┘

                         ↓

┌─────────────────────────────────────────────────┐
│ Plastically deforming at least one vane of the    │
│ pair of adjacent vanes.                           │    *250*
└─────────────────────────────────────────────────┘

*FIG. 4*

50

Air

$P_{atm}$    $\rho_{atm}$
$T_{atm}$    $\mu_{atm}$

52   Booster

$P_1$    $\rho_1$
$T_1$    $\mu_1$

$P_1$   $\rho_1$
$T_1$   $\mu_1$

$P_4$    $\rho_4$
$T_4$    $\mu_4$

22   Vane ring

$P_3$    $\rho_3$
$T_3$    $\mu_3$

$P_3$   $\rho_3$
$T_3$   $\mu_3$

FIG. 5

400

418

Memory

Data

416

Inputs

Instructions

414

Outputs

412

FIG. 6

18